# EUROPEAN PATENT APPLICATION

(11) **EP 4 797 392 A1**
(43) Date of publication of application: **26.08.2026**
(21) Application number: 25869582.4
(22) Date of filing: 24.12.2025
(51) Int. Cl.: H01M 50/102, H01M 50/166

(54) **CASING ASSEMBLY, BATTERY, AND ENERGY STORAGE DEVICE**

(30) Priority: 30.12.2024 CN 202423295454 U; 30.12.2024 CN 202411978457
(71) Applicant: Eve Power Co., Ltd., Jingmen, Hubei 448000 (CN)
(72) Inventor: PU, Xiaojun, Jingmen, Hubei 448000 (CN); SONG, Fuqiang, Jingmen, Hubei 448000 (CN)
(74) Representative: Zhu, Puxing
(86) International application number: PCT/CN2025/145326
(87) International publication number: WO 2026/145217

(57) **Abstract**

The present application provides a housing assembly, a battery, and an energy storage device. The housing assembly includes a housing body and a cover. The housing body is provided with an accommodating cavity and includes two first end portions arranged oppositely. At least one first end portion is provided with a mounting hole communicated with the accommodating cavity. The cover includes a cover body and an insertion portion, and the insertion portion is inserted into the mounting hole. The inner side wall of the mounting hole includes a first side wall section that is tapered and connected to the first end portion and/or the side wall of the insertion portion includes a second side wall section that is tapered.

## Description

This application claims priority to and the benefit of Chinese Patent Application Nos. 202423295454,4 and 202411978457.X, filed with the China National Intellectual Property Administration on Dec. 30, 2024, entitled "HOUSING ASSEMBLY, BATTERY, AND ENERGY STORAGE DEVICE", the disclosures of which are incorporated herein by reference in their entirety.

### TECHNICAL FIELD

The present application relates to the field of energy storage technologies, and in particular, to a housing assembly, a battery, and an energy storage device.

### BACKGROUND

During the process of assembling a cover with a housing body of a housing assembly, the insertion portion of the cover is typically inserted into the mounting hole of the housing body. However, during assembly, the insertion portion may easily scrape or even compress the mounting hole. When the insertion portion scrapes the mounting hole, it may generate metal debris or even metal shavings, increasing the risk of short circuits during the use of the battery. When the insertion portion compresses the mounting hole, it may lead to deformation of the housing, resulting in a reduced yield rate and increased costs.

### SUMMARY

Embodiments of the present application provide a housing assembly, a battery, and an energy storage device, aimed at addressing a problem in the related art where the insertion portion easily scrapes or even compresses the mounting hole during the assembly process of the housing body and cover. This may increase the risk of short circuits during battery use and lead to deformation of the housing, resulting in a reduced yield rate and increased costs.

In a first aspect, some embodiments of the present application provide a housing assembly, including:
a housing body provided with an accommodating cavity, where the accommodating cavity is configured for installation of an electrode assembly, the housing body includes two first end portions arranged oppositely in a first direction, and at least one of the two first end portions is provided with a mounting hole extending along the first direction and communicated with the accommodating cavity; and
at least one cover disposed in one-to-one correspondence with the mounting holes, where the cover includes a cover body and an insertion portion protruding from the cover body, the cover body is configured to seal the mounting hole, and the insertion portion is inserted into the mounting hole;
where an inner side wall of the mounting hole includes a first side wall section connected to one of the two first end portions; in a direction from the mounting hole to the accommodating cavity, the first side wall section is tapered from an inner side wall of the housing body towards an axis of the housing body; and/or
a side wall of the insertion portion includes a second side wall section away from the cover body; in a direction away from the cover body, the second side wall section is tapered from the inner side wall of the housing body towards the axis of the housing body.

In a second aspect, some embodiments of the present application provide a battery, including:
the above housing assembly; and
an electrode assembly mounted within the accommodating cavity.

According to a third aspect, some embodiments of the present application provide an energy storage device.

In some embodiments, the energy storage device includes the above battery.

In the embodiments of the present application, when the first side wall section connected to the first end portion is tapered from the inner side wall of the housing body towards the axis of the housing body in the direction from the mounting hole to the accommodating cavity, the contact area between the insertion portion and the first side wall section increases. This prevents stress concentration at a single point between the insertion portion and the first side wall section, reduces the sharpness of the edges of the housing body, and lowers the risk of generating metal shavings or metal debris during the installation of the cover onto the housing body. This helps prevent short circuits in the battery during use due to the presence of metal shavings or metal debris. Additionally, the tapered configuration of the first side wall section also serves a guiding function, which can alleviate the problem of the mounting hole being compressed due to tolerances or tooling positioning errors during the assembly of the cover and the housing body. This ensures a smoother assembly of the cover and the housing body, improving the yield rate of the housing and reducing costs. When the second side wall section, which is distal from the cover body, is tapered from the inner side wall of the housing body towards the axis of the housing body in the direction away from the cover body, the contact area between the second side wall section and the mounting hole increases during insertion. This prevents stress concentration at a single point between the second side wall section and the side wall of the mounting hole, reduces the sharpness of the edges of the insertion portion, and lowers the risk of generating metal shavings or metal debris during the installation of the cover onto the housing body. This helps prevent short circuits in the battery during use due to the presence of metal shavings or metal debris. Additionally, the tapered configuration of the second side wall section also serves a guiding function, which can alleviate the problem of the mounting hole being compressed due to tolerances or tooling positioning errors during the assembly of the cover and the housing body. This ensures a smoother assembly of the cover and the housing body, improving the yield rate of the housing and reducing costs.

### BRIEF DESCRIPTION OF THE DRAWINGS

To clearly illustrate the technical solutions in the embodiments of the present application, the drawings to be used in the description of the embodiments will be briefly introduced below. Obviously, the drawings in the following description are only some embodiments o the present application, and other drawings may be obtained by those skilled in the art based on these drawings without creative efforts.
FIG. 1 is an exploded schematic view of a housing assembly according to some possible implementations of the present application;
FIG. 2 is a schematic cross-sectional view of a cover shown in FIG. 1;
FIG. 3 is a schematic structural view of a battery according to some possible implementations of the present application;
FIG. 4 is a schematic cross-sectional view of the battery shown in FIG. 3;
FIG. 5 is a partially enlarged schematic view of portion A in FIG. 4;
FIG. 6 is a partially enlarged schematic view of portion B in FIG. 4;
FIG. 7 is a schematic structural view of a second insulating member shown in FIG. 3;
FIG. 8 is a schematic front view of the second insulating member shown in FIG. 7;
FIG. 9 is a schematic structural view of an electrode assembly shown in FIG. 3.

Description of reference numerals:
1000, battery;
100, housing assembly; 110, housing body; 111, accommodating cavity; 112, first end portion; 1121, mounting hole; 11211, first side wall section; 113, first side portion; 120, cover; 121, cover body; 122, insertion portion; 1221, second side wall section; 123, first through hole;
200, electrode assembly; 210, second end portion; 211, welding region; 212, non-welding region; 220, second side portion; 221, first end side surface;
310, insulating cover; 311, end insulating portion; 312, side insulating portion;
400, second insulating member; 410, second through hole; 420, insulating body; 430, surrounding portion; 431, second end side surface; 440, accommodating groove; 450, pressing portion;
500, gap;
610, connecting member; 620, pole.

### DETAILED DESCRIPTION

During the process of assembling a cover with a housing body of a housing assembly, the insertion portion of the cover is typically inserted into the mounting hole of the housing body. However, during assembly, the insertion portion may easily scrape or even compress the mounting hole. When the insertion portion scrapes the mounting hole, it may generate metal debris or even metal shavings, increasing the risk of short circuits during the use of the battery. When the insertion portion compresses the mounting hole, it may lead to deformation of the housing, resulting in a reduced yield rate and increased costs.

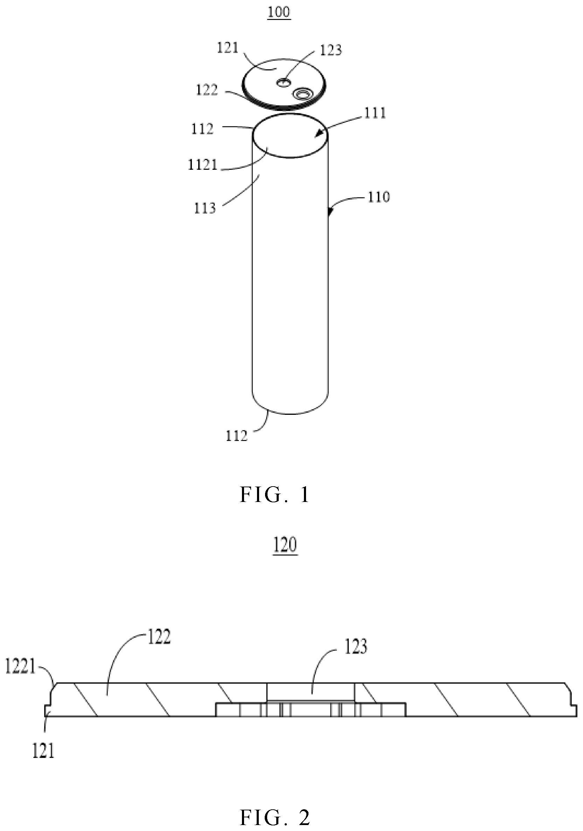

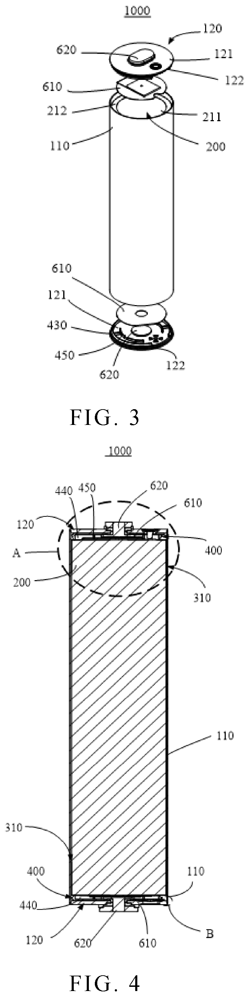

In view of this, the present application provides a housing assembly. FIG. 1 and FIG. 2 are schematic structural diagrams of the housing assembly according to some embodiments of the present application, and FIGs. 3 to 9 are schematic structural diagrams of a battery according to some embodiments of the present application. The housing assembly 100 provided in the present application can prevent the insertion portion from scraping or even compressing the mounting hole during the assembly process of the housing body and cover, thereby reducing the risk of short circuits during the use of the battery, improving the yield rate of the housing, and reducing costs. The following will provide a detailed description of the housing assembly 100 in conjunction with the drawings.

Referring to FIG. 1 and FIG. 2, the housing assembly 100 includes a housing body 110 and at least one cover 120.

The housing body 110 is provided with an accommodating cavity 111, which is configured to accommodate an electrode assembly 200. This design ensures that the electrode assembly 200 can be securely mounted within the housing body 110, preventing damage due to external impact or vibration. The housing body 110 includes two first end portions 112 arranged oppositely in the first direction. At least one first end portion 112 is provided with a mounting hole 1121 extending along the first direction. The mounting hole 1121 is communicated with the accommodating cavity 111, allowing the electrode assembly 200 to be easily inserted into the accommodating cavity 111 through the mounting hole 1121, thereby simplifying the installation of the electrode assembly 200 and providing convenience for the installation of the electrode assembly 200.

Additionally, in some embodiments, either one first end portion 112 may be provided with a mounting hole 1121, or both first end portions 112 may be provided with mounting holes 1121. Exemplarily, the number of first end portions 112 with mounting holes 1121 can be set as needed, which is not limited in the present application. Furthermore, the shape of the housing body 110 can vary, for example, it can be cylindrical, cuboidal, or the like, which is not limited in the present application.

Referring to FIG. 3 and FIG. 4, at least one cover 120 is provided, corresponding one-to-one with the mounting holes 1121. The cover 120 includes a cover body 121 and an insertion portion 122 protruding from the cover body 121. The cover body 121 is configured to seal the mounting hole 1121, and the insertion portion 122 is inserted into the corresponding mounting hole 1121. This design prevents external dust, moisture, humidity, and other contaminants from entering the interior of the housing body 110 through the mounting hole 1121, thereby protecting the internal electrode assembly 200 or other sensitive components from damage. The insertion portion 122 protrudes from the cover body 121 and is inserted into the corresponding mounting hole 1121, making the installation process of the housing body 110 and the cover 120 more intuitive and straightforward. Users only need to align the insertion portion 122 of the cover 120 with the mounting hole 1121 and insert it, without the need for complex positioning, thereby reducing the difficulty of installation.

It should be noted that after the cover 120 is installed onto the housing body 110, sealing methods (such as sealing rings, sealants, etc.) can be used to achieve a seal at the connection between the cover 120 and the housing body 110. This ensures the sealing of the accommodating cavity 111, preventing dust, moisture, and other external contaminants from entering the interior of the housing body 110 and causing damage to the electrode assembly 200.

Exemplarily, the number of covers 120 can be set as needed. For instance, when there is one mounting hole 1121, one corresponding cover 120 is provided. When there are two mounting holes 1121, two corresponding covers 120 are provided. The present application does not impose any limitations on the number of covers 120.

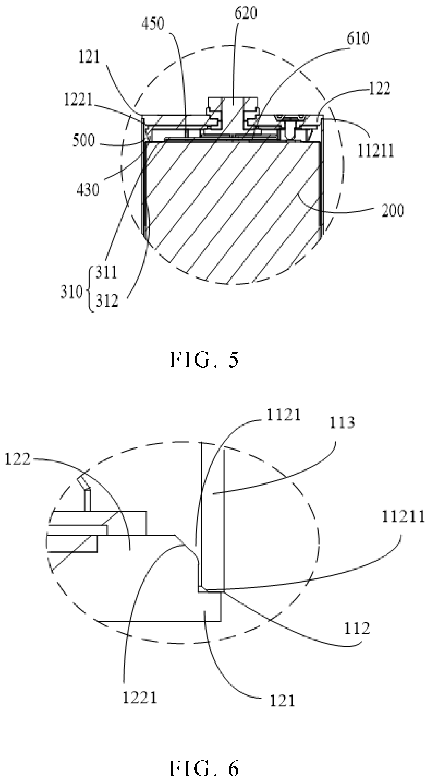

Referring to FIG. 5 and FIG. 6, the inner side wall of the mounting hole 1121 includes a first side wall section 11211 connected to the first end portion 112. In the direction from the mounting hole 1121 to the accommodating cavity 111, the first side wall section 11211 is tapered from the inner side wall of the housing body 110 towards the axis of the housing body 110.

It should be noted that the tapered configuration here indicates that the cross-sectional area of the hole section formed by the first side wall section 11211 in the first direction gradually decreases in the direction from the mounting hole 1121 to the accommodating cavity 111.

It should be noted that the cross-sectional shape of the mounting hole 1121 can vary. For example, the cross-section of the mounting hole 1121 can be circular, rectangular, square, elliptical, etc. Exemplarily, the specific shape of the mounting hole 1121 can be set as needed, which is not limited in the present application.

Referring to FIG. 5 and FIG. 6, the side wall of the insertion portion 122 includes a second side wall section 1221 that is away from the cover body 121. In the direction away from the cover body 121, the second side wall section 1221 is tapered from the inner side wall of the housing body 110 towards the axis of the housing body 110.

It should be noted that the tapered configuration here indicates that the cross-sectional area of the insertion section corresponding to the second side wall section 1221 gradually decreases in the direction away from the cover body 121.

In some embodiments of the present application, when the first side wall section 11211 connected to the first end portion 112 is tapered from the inner side wall of the housing body 110 towards the axis of the housing body 110 in the direction from the mounting hole 1121 to the accommodating cavity 111, the contact area between the insertion portion 122 and the first side wall section 11211 increases. This prevents stress concentration at a single point between the insertion portion 122 and the first side wall section 11211, reduces the sharpness of the edges of the housing body 110, and lowers the risk of generating metal shavings or metal debris during the installation of the cover 120 onto the housing body 110. This helps prevent short circuits in the battery 1000 during use due to the presence of metal shavings or metal debris. Additionally, the tapered configuration of the first side wall section 11211 also serves a guiding function, which can alleviate the problem of the mounting hole 1121 being compressed due to tolerances or tooling positioning errors during the assembly of the cover 120 and the housing body 110. This ensures a smoother assembly of the cover 120 and the housing body 110, improving the yield rate of the housing and reducing costs. When the second side wall section 1221, which is distal from the cover body 121, is tapered from the inner side wall of the housing body 110 towards the axis of the housing body 110 in the direction away from the cover body 121, the contact area between the second side wall section 1221 and the mounting hole 1121 increases during insertion. This prevents stress concentration at a single point between the second side wall section 1221 and the side wall of the mounting hole 1121, reduces the sharpness of the edges of the insertion portion 122, and lowers the risk of generating metal shavings or metal debris during the installation of the cover 120 onto the housing body 110. This helps prevent short circuits in the battery 1000 during use due to the presence of metal shavings or metal debris. Additionally, the tapered configuration of the second side wall section 1221 also serves a guiding function, which can alleviate the problem of the mounting hole 1121 being compressed due to tolerances or tooling positioning errors during the assembly of the cover 120 and the housing body 110. This ensures a smoother assembly of the cover 120 and the housing body 110, improving the yield rate of the housing and reducing costs.

Referring to FIG. 1, FIG. 5, and FIG. 6, in some embodiments, the housing body 110 further includes a first side portion 113 that connects the two first end portions 112. The first side portion 113 and the two end portions together enclose and form the accommodating cavity 111. Since the cover 120 is typically welded to the housing body 110, the wall thickness of the first side portion 113 is denoted by δ. In the first direction, the orthographic projection of the first side wall section 11211 is a first annular body. In the wall thickness direction of the first side portion 113, the thickness of the first annular body is denoted by H1, where 0.2δ ≤ H1 ≤ 0.8δ. This configuration ensures that the first side wall section 11211 provides a guiding function when the insertion portion 122 is inserted into the mounting hole 1121, while also ensuring that the housing assembly 100 meets the sealing and strength requirements when the cover 120 is welded to the housing body 110. If the thickness of the first annular body is less than 0.2δ, the guiding function of the first side wall section 11211 will be insufficient, making the edges of the housing body 110 sharper and more prone to deformation and the generation of metal shavings or metal debris during the installation of the cover 120 onto the housing body 110. Conversely, if the thickness of the first annular body exceeds 0.86, the weld pool's penetration and width during the welding of the cover 120 to the housing body 110 may not meet the sealing and strength requirements.

It should be noted that the thickness of the first annular body refers to the distance between the inner circle and the outer circle of the first annular body. Exemplarily, the thickness of the first annular body can be 0.2δ, 0.25δ, 0.3δ, 0.36δ, 0.4δ, 0.47δ, 0.5δ, 0.558, 0.6δ, 0.68δ, 0.7δ, 0.76δ, 0.8δ, etc. The thickness of the first annular body can be selected as needed, and the present application does not limit it.

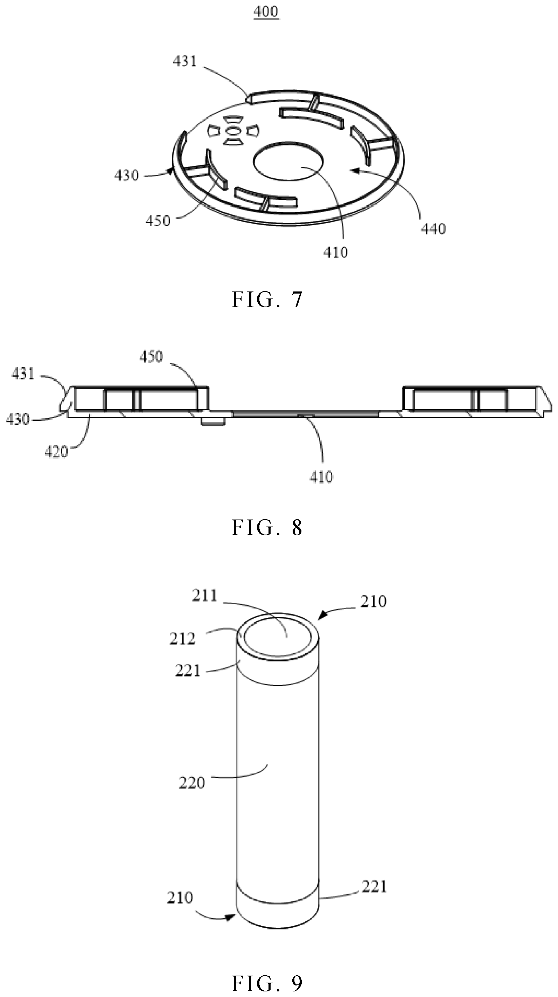

There are various ways to achieve the tapered configuration of the first side wall section 11211 from the mounting hole 1121 towards the accommodating cavity 111. For example, referring to FIG. 1 and FIG. 8, in some embodiments, at least a portion of the first side wall section 11211 is configured as a first inclined surface. The presence of the first inclined surface increases the contact area between the insertion portion 122 and the inner side wall of the mounting hole 1121, preventing stress concentration at a single point between the insertion portion 122 and the inner side wall of the mounting hole 1121. This reduces the sharpness of the edges of the housing body 110, making it less likely for metal shavings or metal debris to be generated when the insertion portion 122 is inserted into the mounting hole 1121. Additionally, since the first inclined surface provides a guiding function, it can alleviate the problem of the mounting hole 1121 being compressed due to tolerances or tooling positioning errors during the installation of the cover 120 and the housing body 110, ensuring a smoother installation process. Furthermore, the structure of the first inclined surface is simple and easy to process.

There are various ways to achieve the tapered configuration of the first side wall section 11211 from the mounting hole 1121 towards the accommodating cavity 111. In some other embodiments, at least a portion of the first side wall section 11211 is configured as a first curved surface. The presence of the first curved surface increases the contact area between the insertion portion 122 and the inner side wall of the mounting hole 1121, preventing stress concentration at a single point between the insertion portion 122 and the inner side wall of the mounting hole 1121. This reduces the sharpness of the edges of the housing body 110, making it less likely for metal shavings or metal debris to be generated when the insertion portion 122 is inserted into the mounting hole 1121. Additionally, since the first curved surface provides a guiding function, it can alleviate the problem of the mounting hole 1121 being compressed due to tolerances or tooling positioning errors during the installation of the cover 120 and the housing body 110, ensuring a smoother installation process. Furthermore, the structure of the first curved surface is simple and easy to process. Moreover, the configuration of the first curved surface enhances the aesthetic appeal of the housing body 110.

It should be noted that, in other embodiments, a portion of the first side wall section 11211 can be configured as a first inclined surface, while another portion can be configured as a first curved surface. When both the first inclined surface and the first curved surface are present, they both increase the contact area between the insertion portion 122 and the inner side wall of the mounting hole 1121. This means that stress is distributed over a larger contact region, which helps reduce the risk of damage to the housing body 110 or the cover 120 due to stress concentration, thereby minimizing the generation of metal shavings or metal debris. The presence of both the first inclined surface and the first curved surface effectively reduces the sharpness of the edges of the housing body 110. This reduction in sharpness decreases the likelihood of scratches or wear caused by the edges during the insertion of the insertion portion 122, and also reduces the production of metal shavings or metal debris. Both the first inclined surface and the first curved surface provide a guiding function, facilitating smoother alignment and insertion during the installation of the cover 120 and the housing body 110. This guiding function can significantly reduce the compression of the mounting hole 1121 due to tolerances or tooling positioning errors, making the installation process smoother. The structures of the first inclined surface and the first curved surface are relatively simple and easy to manufacture, which reduces production costs and improves production efficiency. The presence of the first curved surface not only offers functional advantages but also significantly enhances the aesthetic appeal of the housing body 110.

Referring to FIG. 1, FIG. 5, and FIG. 6, in some embodiments, the housing body 110 further includes a first side portion 113 that connects between the two first end portions 112. The wall thickness of the first side portion 113 is denoted by δ. In the first direction, the orthographic projection of the second side wall section 1221 is a second annular body. In the wall thickness direction of the first side portion 113, the thickness of the second annular body is denoted by H2, where 0.4δ ≤ H2 ≤ 1.6δ. This configuration ensures that the second side wall section 1221 provides a guiding function when inserted into the mounting hole 1121, while also ensuring that the housing assembly 100 meets the sealing and strength requirements when the cover 120 is welded to the housing body 110. If the thickness of the second annular body is less than 0.4δ, the guiding function of the second side wall section 1221 becomes insufficient, making the edges of the insertion portion 122 relatively sharp. This may lead to deformation due to compression and the generation of metal shavings or metal debris during the installation of the cover 120 with the housing body 110. Conversely, if the thickness of the second annular body exceeds 1.6δ, the weld pool's penetration and width during the welding of the cover 120 to the housing body 110 may not meet the sealing and strength requirements.

It should be noted that the thickness of the second annular body refers to the distance between the inner circle and the outer circle of the second annular body. Exemplarily, the thickness of the second annular body can be 0.4δ, 0.5δ, 0.6δ, 0.7δ, 0.75δ, 0.8δ, 0.88δ, 0.9δ, 1.1δ, 1.2δ, 1.3δ, 1.4δ, 1.5δ, 1.6δ, etc. The thickness of the second annular body can be selected as needed, and the present application does not limit it.

There are various ways to achieve the configuration where the second side wall section 1221 tapers away from the cover body 121. For example, referring to FIG. 2, in some embodiments, at least a portion of the second side wall section 1221 is configured as a second inclined surface. The presence of the second inclined surface increases the contact area between the insertion portion 122 and the inner side wall of the mounting hole 1121, preventing stress concentration at a single point between the insertion portion 122 and the inner side wall of the mounting hole 1121. This reduces the sharpness of the edges of the insertion portion 122, making it less likely for metal shavings or metal debris to be generated when the insertion portion 122 is inserted into the mounting hole 1121. Additionally, since the second inclined surface provides a guiding function, it can alleviate the problem of the mounting hole 1121 being compressed due to tolerances or tooling positioning errors during the installation of the cover 120 and the housing body 110, ensuring a smoother installation process. Furthermore, the structure of the second inclined surface is simple and easy to process.

There are various ways to achieve the configuration where the second side wall section 1221 tapers away from the cover body 121. In some other embodiments, at least a portion of the second side wall section 1221 is configured as a second curved surface. The presence of the second curved surface increases the contact area between the insertion portion 122 and the inner side wall of the mounting hole 1121, preventing stress concentration at a single point between the insertion portion 122 and the inner side wall of the mounting hole 1121. This reduces the sharpness of the edges of the insertion portion 122, making it less likely for metal shavings or metal debris to be generated when the insertion portion 122 is inserted into the mounting hole 1121. Additionally, since the second curved surface provides a guiding function, it can alleviate the problem of the mounting hole 1121 being compressed due to tolerances or tooling positioning errors during the installation of the cover 120 and the housing body 110, ensuring a smoother installation process. Furthermore, the structure of the second curved surface is simple and easy to process. Moreover, the configuration of the second curved surface enhances the aesthetic appeal of the housing body 110.

It should be noted that, in other embodiments, a portion of the second side wall section 1221 can be configured as a second inclined surface, while another portion can be configured as a second curved surface. When both the second inclined surface and the second curved surface are present, they both increase the contact area between the insertion portion 122 and the inner side wall of the mounting hole 1121. This means that stress is distributed over a larger contact region, which helps reduce the risk of damage to the housing body 110 or the cover 120 due to stress concentration, thereby minimizing the generation of metal shavings or metal debris. The presence of both the second inclined surface and the second curved surface effectively reduces the sharpness of the edges of the insertion portion 122. This reduction in sharpness decreases the likelihood of scratches or wear caused by the edges during the insertion of the insertion portion 122, and also reduces the production of metal shavings or debris. Both the second inclined surface and the second curved surface provide a guiding function, facilitating smoother alignment and insertion during the installation of the cover 120 and the housing body 110. This guiding function can significantly reduce the compression of the mounting hole 1121 due to tolerances or tooling positioning errors, making the installation process smoother. The structures of the second inclined surface and the second curved surface are relatively simple and easy to manufacture, which reduces production costs and improves production efficiency. The presence of the second curved surface not only offers functional advantages but also significantly enhances the aesthetic appeal of the housing body 110.

Referring to FIGs. 3 to 9, some embodiments of the present application provide a battery 1000. The battery 1000 includes a housing assembly 100 and an electrode assembly 200. The specific structure of the housing assembly 100 can be referenced in the above embodiments. Since the battery 1000 adopts all the technical solutions of the embodiments, it possesses all the beneficial effects brought by the technical solutions of the embodiments, which will not be repeated here. Additionally, the electrode assembly 200 is mounted within the accommodating cavity 111. The accommodating cavity 111 provides a relatively enclosed and stable environment for the electrode assembly 200. This helps prevent external contaminants (such as dust and moisture) from entering the interior, thereby reducing the risk of failure of the battery 1000. The design of the accommodating cavity 111 can simplify the assembly process of the battery 1000. The electrode assembly 200 can be directly installed into the accommodating cavity 111 without the need for additional fixing devices or complex assembly steps.

Referring to FIG. 3, FIG. 5, and FIG. 9, in some embodiments, the electrode assembly 200 includes a second end portion 210 corresponding to the mounting hole 1121 and a second side portion 220 connected to the second end portion 210. The second end portion 210 includes a welding region 211 and a non-welding region 212 surrounding the periphery of the welding region 211. The design of the welding region 211 ensures that the welding between the electrode assembly 200 and the housing body 110 or other components is more precise and reliable, which helps ensure the strength and stability of the welded connection, thereby enhancing the overall performance of the battery 1000. The battery 1000 further includes a first insulating member, a portion of the first insulating member is configured to contact the non-welding region 212, and another portion of the first insulating member is configured to wrap at least a portion of the side portion, insulating and isolating the housing body 110 from the electrode assembly 200. This helps ensure the battery 1000 operates under normal working conditions. The use of the non-welding region 212 and the first insulating member helps reduce electrical interference and noise within the battery 1000, thereby improving the durability and reliability of the battery 1000.

Since the electrode assembly 200 is secured at the end of winding using end tape, and because the length of the end tape is less than or equal to the axial length of the electrode assembly 200, it cannot ensure insulation of the tab in the flattened region of the end surface. Therefore, insulating tape needs to be applied to the side end portion of the electrode assembly 200. In some embodiments, the two first end portions 112 are each provided with a mounting hole 1121, and there are two second end portions 210. The second side portion 220 includes two first end side surfaces 221 spaced in the first direction, with each first end side surface 221 connected to a second end portion 210. Referring to FIG. 7 and FIG. 8, the first insulating member includes two insulating covers 310, which are spaced in the first direction. Each insulating cover 310 includes an end insulating portion 311 and a side insulating portion 312 connected to each other. The end insulating portion 311 is in contact with the non-welding region 212, and the side insulating portion 312 wraps around the first end side surface 221, enhancing the electrical isolation between the housing body 110 and the electrode assembly 200, thereby improving the safety of the battery 1000. The two insulating covers 310 are spaced not only to consider electrical isolation but also to address heat dissipation needs, preventing the first insulating member from wrapping the entire second side portion 220, which may lead to poor heat dissipation of the electrode assembly 200. Additionally, the two spaced insulating covers 310 reduce the production cost of the first insulating member.

Referring to FIG. 4, FIG. 7, and FIG. 8, in some embodiments, the battery 1000 further includes a second insulating member 400, which corresponds to the cover 120. The second insulating member 400 is insulated and connected between the corresponding cover 120 and the second end portion 210. This arrangement prevents the electrode assembly 200 from short-circuiting with the top cover, thereby enhancing the safety and reliability of the battery 1000.

Referring to FIG. 5 and FIG. 9, in some embodiments, in the first direction, a part of the orthographic projection of the second insulating member 400 on the second end portion 210 is located within the non-welding region 212. The second insulating member 400 is configured to press and secure the portion of the first insulating member that is in contact with the non-welding region 212. This ensures that while the second insulating member 400 insulates and connects the cover 120 and the electrode assembly 200, it also presses and secures the first insulating member to the electrode assembly 200. This prevents loosening or displacement of the first insulating member due to vibration or impact, thereby improving the reliability of the insulation between the electrode assembly 200 and the housing body 110.

Referring to FIG. 5, in some embodiments, a gap 500 is provided between the second insulating member 400 and the inner side wall of the housing body 110. This design ensures that during the welding process of the cover 120 and the housing body 110, the high temperatures generated between the housing body 110 and the top cover do not damage the insulating member. If the second insulating member 400 is in close contact with the inner side wall of the housing body 110, it could be damaged by the high temperatures, potentially losing its insulating properties. By providing the gap 500, the insulating member is effectively shielded from direct exposure to high temperatures, protecting it from heat damage. The second insulating member 400 is a crucial electrical isolation component in the battery 1000, and its performance directly affects the safety and reliability of the battery 1000. If the second insulating member 400 is damaged by heat, the electrical isolation performance of the battery 1000 would be significantly compromised. The gap 500 ensures that the second insulating member 400 remains undamaged during the welding process, thereby maintaining its excellent insulating properties.

It should be noted that the second insulating member 400 can be made from various materials, such as rubber, silicone, plastic, or ceramic. The material of the second insulating member 400 can be selected as needed, and the present application does not limit the choice of material.

Referring to FIG. 4 and FIG. 5, in some embodiments, at least one cover 120 is fixedly connected to the housing body 110, and the second insulating member 400 abuts between the corresponding cover 120 and the electrode assembly 200. This configuration allows the second insulating member 400 to play a role in securing the electrode assembly 200, preventing it from shaking due to vibration or impact during the operation of the battery 1000. By abutting the second insulating member 400, the connection between the electrode assembly 200 and the cover 120 becomes tighter and more stable. This stability helps reduce internal vibration and noise within the battery 1000, thereby enhancing the overall performance of the battery 1000. The movement of the electrode assembly 200 could lead to wear or damage to other internal components of the battery 1000, affecting the li fespan and safety of the battery 1000. The securing function of the second insulating member 400 effectively reduces the risk of such internal damage.

Referring to FIG. 2, FIG. 4, and FIG. 5, in some embodiments, the cover 120 is provided with a first through hole 123 extending along the first direction, and the second insulating member 400 is provided with a second through hole 410 extending along the first direction. The second through hole 410 corresponds to the first through hole 123. The battery 1000 assembly further includes a connection assembly, which is arranged corresponding to the cover 120. The connection assembly includes a connecting member 610 and a pole 620. The connecting member 610 is welded and fixed to the welding region 211, and one end of the pole 620 sequentially passes through the first through hole 123 and the second through hole 410 to electrically connect with the connecting member 610. This design allows the pole 620 to smoothly pass through the cover 120 and the second insulating member 400, achieving electrical connection with the connecting member 610. The welding and fixing of the connecting member 610 to the welding region 211 ensure the reliability and stability of the connection, while the pole 620 is responsible for transmitting electrical energy from the inside of the battery 1000 to an external circuit. The presence of the second insulating member 400 provides electrical isolation, preventing the risk of a short circuit between the cover plate and the electrode assembly 200, thereby ensuring the normal operation of the battery 1000. By welding the connecting member 610 to the welding region 211 and electrically connecting the pole 620 through the first through hole 123 and the second through hole 410 to the connecting member 610, this design enhances the reliability of the connection between the battery 1000 and the external circuit. Even in harsh environments such as vibration or impact, the connection assembly can maintain a stable working state.

Referring to FIG. 7 and FIG. 8, in some embodiments, the second insulating member 400 includes an insulating body 420 and a surrounding portion 430 protruding from the insulating body 420. The surrounding portion 430 extends along the circumferential direction of the insulating body 420, so that the insulating body 420 and the surrounding portion 430 enclose to form an accommodating groove 440. The accommodating groove 440 provides an installation space for the connecting member 610. The connecting member 610 is mounted within the accommodating groove 440, achieving an insulated connection between the cover 120 and the connecting member 610, thereby reducing the risk of a short circuit. The design of installing the connecting member 610 within the accommodating groove 440 also ensures the stability and reliability of the connecting member 610. The combined design of the insulating body 420 and the surrounding portion 430 significantly enhances the electrical isolation performance of the second insulating member 400.

Referring to FIG. 8, in some embodiments, the surrounding portion 430 includes a second end side surface 431 that is positioned away from the insulating body 420 and faces away from the accommodating groove 440. In the direction away from the insulating body 420, the second end side surface 431 is tapered from the inner side wall of the housing body 110 towards the axis of the housing body 110. This design provides a guiding function, making the installation and removal of the second insulating member 400 more convenient.

Referring to FIG. 8, in some embodiments, at least a portion of the second end side surface 431 is configured as a third inclined surface and/or at least a portion of the second end side surface 431 is configured as a third curved surface. This configuration can optimize the stress distribution between the second end side surface 431 and the housing body 110, reducing stress concentration and preventing damage to the housing body 110 and the second insulating member 400 during installation.

Referring to FIG. 5, FIG. 7, and FIG. 8, in some embodiments, the second insulating member 400 further includes a pressing portion 450 protruding from the second side. The pressing portion 450 is located within the accommodating groove 440 and is configured to press the connecting member 610 against the welding region 211. The presence of the pressing portion 450 provides additional fixation for the connecting member 610 within the accommodating groove 440. By pressing the connecting member 610 against the welding region 211 with the pressing portion 450, the risk of the connecting member 610 becoming loose in dynamic environments such as vibration or impact is significantly reduced, thereby ensuring the stability and reliability of the connection. The pressing portion 450 helps achieve a tighter electrical contact between the connecting member 6 10 and the welding region 211. This tight contact can reduce contact resistance, thereby decreasing energy loss and heat generation, and improving the efficiency of the electrical system.

Referring to FIG. 5, in some embodiments, in the first direction, the maximum cross-sectional area of the second insulating member 400 is greater than or equal to the cross-sectional area of the insertion portion 122. This ensures that when the insulating member is installed in conjunction with the cover 120 and the housing body 110, the first side wall section 11211 can always contact the second side wall section 1221. This configuration provides auxiliary guidance from the first side wall section 11211 and the second side wall section 1221, while reducing the risk of damage or wear between the cover 120 and the housing body 110 during assembly.

Some embodiments of the present application provide an energy storage device, which includes a battery 1000. The specific structure of the battery 1000 can be referenced in the above embodiments. Since this energy storage device adopts all the technical solutions of the embodiments, it possesses at least all the beneficial effects brought by the technical solutions of the embodiments, which will not be repeated here.

## Claims

1. A housing assembly (100), comprising:
a housing body (110), provided with an accommodating cavity (111), wherein the accommodating cavity (111) is configured for installation of an electrode assembly (200), the housing body (110) comprises two first end portions (112) arranged oppositely in a first direction, and at least one of the two first end portions (112) is provided with a mounting hole (1121) extending along the first direction and communicated with the accommodating cavity (111); and
at least one cover (120), disposed in one-to-one correspondence with the mounting holes (1121), wherein the cover (120) comprises a cover body (121) and an insertion portion (122)protruding from the cover body (121), the cover body (121) is configured to seal the mounting hole (1121), and the insertion portion (122) is inserted into the mounting hole (1121);
wherein an inner side wall of the mounting hole (1121) comprises a first side wall section (11211) connected to one of the two first end portions (112); in a direction from the mounting hole (1121) to the accommodating cavity (111), the first side wall section (11211) is tapered from an inner side wall of the housing body (110) towards an axis of the housing body (110); and/or
wherein a side wall of the insertion portion (122) comprises a second side wall section (1221) away from the cover body (121); in a direction away from the cover body (121), the second side wall section (1221) is tapered from the inner side wall of the housing body (110) towards the axis of the housing body (110).

2. The housing assembly (100) according to claim 1, wherein the housing body (110) further comprises a first side portion (113) connected between the two first end portions (112), and a wall thickness of the first side portion (113) is denoted by δ;
wherein an orthographic projection of the first side wall section (11211) in the first direction is a first annular body, and a thickness of the first annular body in a wall thickness direction of the first side portion (113) is denoted by HI, wherein 0.2δ ≤ Hi ≤ 0.8δ.

3. The housing assembly (100) according to claim 1 or 2, wherein at least a portion of the first side wall section (11211) is configured as a first inclined surface and/or at least a portion of the first side wall section (11211) is configured as a first curved surface.

4. The housing assembly (100) according to claim 1, wherein the housing body (110) further comprises a first side portion (113) connected between the two first end portions (112), and a wall thickness of the first side portion (113) is denoted by δ;
wherein an orthographic projection of the second side wall section (1221) in the first direction is a second annular body, and a thickness of the second annular body in a wall thickness direction of the first side portion (113) is denoted by H₂, wherein 0.4δ ≤ H₂ ≤ 1.6δ.

5. The housing assembly (100) according to claim 1 or 4, wherein at least a portion of the second side wall section (1221) is configured as a second inclined surface and/or at least a portion of the second side wall section (1221) is configured as a second curved surface.

6. A battery (1000), comprising:
the housing assembly (100) as claimed in any one of claims 1 to 5; and
the electrode assembly (200), mounted within the accommodating cavity ( 11 l ).

7. The battery (1000) according to claim 6, wherein the electrode assembly (200) comprises a second end portion (210) corresponding to the mounting hole (1121) and a second side portion (220) connected to the second end portion (210), and the second end portion (210) comprises a welding region (211) and a non-welding region (212) surrounding a periphery of the welding region (211); and
wherein the battery (1000) further comprises a first insulating member, a portion of the first insulating member is in contact with the non-welding region (212), and another a portion of the first insulating member is configured to wrap at least a portion of the side portion, so as to insulate and isolate the housing body (110) from the electrode assembly (200).

8. The battery (1000) according to claim 7, wherein the two first end portions {112) are each provided with the mounting hole (1121);
wherein two second end portions (210) are provided, the second side portion (220) comprises two first end side surfaces (221) spaced apart in the first direction, and the two first end side surfaces (221) are connected to the two second end portions (210), respectively; and
wherein the first insulating member comprises two insulating covers (3 10) spaced apart in the first direction, each of the two insulating covers (310) comprises an end insulating portion (311) and a side insulating portion (312) connected to each other, the end insulating portion (311) is in contact with the non-welding region (212), and the side insulating portion (312) wraps the end side surface.

9. The battery (1000) according to claim 7 or 8, further comprising a second insulating member (400), wherein the second insulating member (400) is disposed corresponding to the cover (120), and the second insulating member (400) is insulatively connected between the cover (120) and the second end portion (210).

10. The battery (1000) according to claim 9, wherein in the first direction, a part of an orthographic projection of the second insulating member (400) on the second end portion (210) is located within the non-welding region (212), and the second insulating member (400) is configured to press and fix a portion of the first insulating member being in contact with the non-welding region (212).

11. The battery (1000) according to claim 9, wherein a gap (500) is provided between the second insulating member (400) and the inner side wall of the housing body (110); and/or
wherein the at least one cover (120) is connected and fixed to the housing body (110), and the second insulating member (400) abuts between a corresponding one of the at least one cover (120) and the electrode assembly (200).

12. The battery (1000) according to claim 9, wherein the cover (120) is provided with a first through hole (123) extending along the first direction, the second insulating member (400) is provided with a second through hole (410) extending along the first direction, and the second through hole (410) corresponds to the first through hole (123); and
wherein the battery (1000) assembly further comprises a connection assembly disposed corresponding to the cover (120), the connection assembly comprises a connecting member (610) and a pole (620), the connecting member (610) is welded and fixed to the welding region (211), and an end of the pole (620) sequentially passes through the first through hole (123) and the second through hole (410) and is electrically connected to the connecting member (610).

13. The battery (1000) according to claim 12, wherein the second insulating member (400) comprises an insulating body (420) and a surrounding portion (430) protruding from the insulating body (420), and the surrounding portion (430) extends along a circumferential direction of the insulating body (420), such that the insulating body (420) and the surrounding portion (430) enclose to form an accommodating groove (440); and
wherein the connecting member (610) is mounted within the accommodating groove (440).

14. The battery (1000) according to claim 13, wherein the surrounding portion (430) comprises a second end side surface (431) being distal from the insulating body (420) and facing away from the accommodating groove (440); in a direction away from the insulating body (420), the second end side surface (431) is tapered from the inner side wall of the housing body (110) towards the axis of the housing body (110).

15. The battery (1000) according to claim 14, wherein at least a portion of the second end side surface (431) is configured as a third inclined surface and/or at least a portion of the second end side surface (431) is configured as a third curved surface.

16. The battery (1000) according to claim 13, wherein the second insulating member (400) further comprises a pressing portion (450) protruding from the second side, the pressing portion (450) is located within the accommodating groove (440), and the pressing portion (450) is configured to press the connecting member (610) against the welding region (211).

17. An energy storage device, comprising the battery (1000) as claimed in any one of claims 6 to 16.
